(19) Europäisches Patentamt
European Patent Office
Office européen des brevets

(11) **EP 4 383 550 A1**

(12) **EUROPEAN PATENT APPLICATION**
published in accordance with Art. 153(4) EPC

(43) Date of publication:
**12.06.2024 Bulletin 2024/24**

(21) Application number: **22853153.9**

(22) Date of filing: **04.08.2022**

(51) International Patent Classification (IPC):
***H02M 7/497*** *(2007.01)*        ***H02M 7/48*** *(2007.01)*
***H02M 7/49*** *(2007.01)*

(52) Cooperative Patent Classification (CPC):
**H02M 7/48; H02M 7/49; H02M 7/497**

(86) International application number:
**PCT/JP2022/029999**

(87) International publication number:
**WO 2023/013735 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021 JP 2021128800**

(71) Applicants:
• **Hitachi Mitsubishi Hydro Corporation**
  **Tokyo 108-0014 (JP)**
• **Hitachi, Ltd.**
  **Tokyo 100-8280 (JP)**

(72) Inventors:
• **KIKUI, Takahiko**
  **Tokyo 108-0014 (JP)**
• **WATANABE, Kenta**
  **Tokyo 100-8280 (JP)**
• **NAKAIDE, Yosuke**
  **Tokyo 100-8280 (JP)**
• **OKAWA, Ryohei**
  **Tokyo 100-8280 (JP)**
• **KIYOFUJI, Yasuhiro**
  **Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **POWER CONVERSION APPARATUS AND CONTROL APPARATUS FOR SAME**

(57)    To provide a power conversion apparatus for reducing time taken for initial charging and discharging operations of the power conversion apparatus, and reducing the size of the initial charging device, and to further provide the control apparatus. A power conversion apparatus includes a unit converter that is formed through parallel connection of a capacitor and a switching circuit constituted by two sets of series-connected switching elements having reflux diodes connected in parallel, a power converter that forms an arm having circulating current suppression reactors connected in series, forms a leg by two sets of the arms connected in series, and connects a connection point of the two sets of the arms, serving as an AC terminal to a phase of a first AC power source to cause both ends of the leg to serve as DC terminals, and a charging and discharging device having one end connected to a second AC power source, and the other end connected to the phase of the first AC power source. The charging and discharging device includes a tapped transformer which makes a position switchable between a high-voltage tap position and a low-voltage tap position, and is connected to the power converter instead of the first AC power source when starting and stopping the power converter.

FIG. 1

**Description**

Technical Field

The present invention relates to a power conversion apparatus using a modular multilevel converter (hereinafter referred to as an MMC converter), and a control apparatus of the power conversion apparatus.

Background Art

The MMC converter includes a voltage source such as a capacitor serving as an energy accumulation element, and a two-terminal arm converter configured by connecting multiple unit converters each constituted by a half-bridge circuit in series. The unit converter generates a desired voltage by controlling a PWM modulation factor of the half-bridge circuit. The capacitor serving as the energy accumulation element has the voltage fluctuated by repeating charging and discharging at the frequency determined by an output AC frequency of the MMC converter.

The two-terminal arm converter connects a first terminal of the arm converter to a terminal of the AC power source at each phase, and a star connected second terminal to a terminal of a DC power source. The arm converter connected to each phase as described above generates a desired AC voltage to control the AC current, and simultaneously, superimposes the DC current for power conversion into/from the DC power source.

The MMC converter executes the current control for adapting the arm current to an AC current command and a DC current command from the outside, implements the function for keeping the equilibrium of the average voltage of the capacitor among the unit converters by mutually adjusting the PWM modulation factors of the half-bridge circuits in the unit converters in an arm (hereinafter referred to as an interstage balance control), and implements the function for keeping the equilibrium of the total accumulated energy of the respective capacitors of the arm convertors (hereinafter referred to as a correlative balance control). Execution of the correlative balance control requires circuit elements for suppressing the circulating current between the arm converters.

Patent Literature 1 discloses the means for providing the circulating current suppressing reactor between the first terminal of the arm convertor and the AC power source terminal for the purpose of suppressing the circulating current. Patent Literature 1 discloses the means in the form of an MMC converter of double star type (hereinafter referred to as a DSMMC converter).

Non-Patent Literature 1 discloses that DC terminals of two DSMMC converters are connected behind to form the power conversion apparatus having one AC power source terminal connected to the power system, and the other AC power source terminal connected to the rotor. With respect to the means disclosed by Non-Patent Literature 1, the DC current is not superimposed on the rotor despite connection to the MMC converter. The means is adaptable to the case of making the speed of the rotor operated at a fixed frequency adjustable by direct connection to the power system.

Meanwhile, Patent Literature 2 discloses the initial charging device for charging the capacitor of the DSMMC converter. The DSMMC converter charges the capacitor from the initial charge power source upon initial starting. When stopping the DSMMC converter owing to the need of maintaining the power conversion apparatus, the capacitor is kept charged at high voltage. Accordingly, when stopping the converter, the capacitor charged at high voltage is preliminarily discharged to secure the safe state.

Patent Literature 2 discloses the means for initially charging the capacitor while suppressing the rush current by connecting the initial charge resistance between initial charge power source and the DSMMC converter upon initial charging. Upon discharging, the DSMMC converter is operated in the state where the initial charge resistance and the three-phase short-circuit switch are combined to release energy accumulated in the capacitor by feeding the discharge current of the capacitor to the initial charge resistance.

Citation List

Patent Literature

Patent Literature 1: Japanese Patent No. 5775033
Patent Literature 2: Japanese Patent No. 6099951

Non-Patent Literature

Non-Patent Literature 1: Makoto HAGIWARA, Kazutoshi NISHIMURA, Yasufumi AKAGI, "High-pressure motor drive using modular multilevel PWM inverter, First Report : Experimental Verification using miniature model at 400V, 15kw", Journal of IEEJ D, April 2010, Vol. 130, Num. 4, pp. 544-55

Summary of Invention

Technical Problem

The present invention relates to a power conversion apparatus constituted by a DSMMC converter, and a control apparatus of the power conversion apparatus. Problems to be considered and solved are described below.

The first problem is that the period from start to stop of the power conversion apparatus is prolonged as the capacitor needs much time for initial charging and discharging operations. Especially, such problem bottlenecks application of the apparatus to the power station often required to start and stop in a short time, for example, the pumped storage power plant, and the offshore wind power plant. Patent Literature 2 does not disclose the means for initially charging and discharging two units of the DSMMC converters simultaneously. Accordingly, initial charging and discharging of the two DSMMC converters need time twice longer than the case of initial charging and discharging of the single DSMMC converter.

The second problem is increase in size of the initial charging device. The size increase of the facility bottlenecks application of the device to the plant with limited installation area; and limited capacity, for example, the pumped storage power plant, and the offshore wind power plant. The size increase of the initial charging device results from necessity of increasing the size of the cooling device for initial charge resistance. According to Patent Literature 2, the capacitor is charged and discharged via the initial charge resistance every time when performing initial charging and discharging operations of the DSMMC converter. Especially in the case of discharging, the initial charge resistance consumes entire energy accumulated in the capacitor. For the purpose of discharging in a short time, it is necessary to improve the discharging performance by increasing the size of the cooling device to avoid destruction owing to temperature rise of the resistance.

There is the means provided for regenerating energy accumulated in the capacitor into the AC power source associated with the DSMMC converter under the AC current control of the DSMMC converter so that the energy consumed by the resistance is reduced. The means is disadvantageous in that the regenerative operation range relies on the voltage VAC of the AC power source associated with the DSMMC converter. In other words, the regenerative operation range under the AC current control is limited up to the capacitor voltage VC at which the modulation factor M of the DSMMC converter does not reach the over-modulation operation region.

The energy reduction amount of the initial charge resistance when applying the regenerative operation under the AC current control is calculated. The modulation factor M of the DSMMC converter is defined by the formula (1). The total energy EC to be accumulated in capacitors of all unit converters for the single unit of the DSMMC converter is defined by the formula (2).

[formula 1]

$$M = \frac{\sqrt{\frac{2}{3}} \times VAC}{\frac{k \times VC}{2}} \qquad \cdots (1)$$

[formula 2]

$$EC = 6 \times k \times \left(\frac{1}{2} \times C \times VC^2\right) \qquad \cdots (2)$$

In the formulae (1) and (2), the VAC denotes the line voltage effective value of the AC power source associated with the DSMMC converter, k denotes the number of unit converters per arm converter, VC denotes the capacitor voltage inside the unit converter, and C denotes the capacitance of the capacitor.

Generally, it is economical to design the power conversion circuit such as the DSMMC converter having a value of high voltage utilization rate. Accordingly, the modulation factor during rated operation is set to be ranged from approximately 0.8 to 0.9. Assuming that values of VAC, k, and C in the formulae (1) and (2) are fixed, and the modulation factor during rated operation is 0.85, the modulation factor reaches the over-modulation operation region (M ≥ 1.0) when the VC is lowered by approximately 17%. Compared with 100% energy consumption by the initial charge resistance as disclosed in Patent Literature 2 (entirely consumed by the resistance), the formula (2) provides approximately 70% energy consumption. There is a limit to energy reduction by approximately 30% at most, and accordingly, downsizing of the initial charging device by this means is restricted.

It is an object of the present invention to solve the problems as described above, and provide the power conversion apparatus for reducing time taken for initial charging and discharging operations of the power conversion apparatus, and reducing the size of the initial charging device, and to further provide the control apparatus of the power conversion apparatus.

Solution to Problem

The present invention provides a power conversion apparatus which includes a unit converter that is formed through parallel connection of a capacitor and a switching circuit constituted by two sets of series-connected switching elements having reflux diodes connected in parallel, a power converter that forms an arm having circulating current suppression reactors connected in series, forms a leg by two sets of the arms connected in series, and connects a connection point of the two sets of the arms, serving as an AC terminal to a phase of a first AC power source to cause both ends of the leg to serve as DC terminals, and a charging and discharging device having one end connected to a second AC power source, and the other end connected to the phase of the first AC power source. The charging and discharging device includes a tapped transformer which makes a position switchable between a high-voltage tap position and a low-voltage tap position, and is connected to the power converter instead of the first AC power source when starting and stopping the power converter.

The present invention provides a control apparatus of a power conversion apparatus, which includes a unit converter that is formed through parallel connection of a capacitor and a switching circuit constituted by two sets of series-connected switching elements having reflux diodes connected in parallel, a power converter which forms an arm having circulating current suppression reactors connected in series, forms a leg by two sets of the arms connected in series, and connects a connection point of the two sets of the arms to a phase of a first AC power source to cause both ends of the leg to serve as DC terminals, and a charging and discharging device having one end connected to a second AC power source, and the other end connected to the phase of the first AC power source. The charging and discharging device includes a tapped transformer which makes a position switchable between a high-voltage tap position and a low-voltage tap position, and is connected to the power converter instead of the first AC power source when starting and stopping the power converter. The control apparatus makes a transition from a resistance charging mode to a bypass charging mode, and further to a switching charging mode for turn-on of the unit converter to connect the first AC power source instead of the second AC power source to the power converter. In the resistance charging mode, the second AC power source is connected to an AC terminal of the power converter via a resistance and the high-voltage tap position of the tapped transformer when starting the power converter. In the bypass charging mode, the AC terminal of the power converter is connected from the second AC power source via the tapped transformer.

The present invention provides a control apparatus of a power conversion apparatus, which includes a unit converter that is formed through parallel connection of a capacitor and a switching circuit constituted by two sets of series-connected switching elements having reflux diodes connected in parallel, a power converter which forms an arm having circulating current suppression reactors connected in series, forms a leg by two sets of the arms connected in series, and connects a connection point of the two sets of the arms to a phase of a first AC power source to cause both ends of the leg to serve as DC terminals, and a charging and discharging device having one end connected to a second AC power source, and the other end connected to the phase of the first AC power source. The charging and discharging device includes a tapped transformer which makes a position switchable between a high-voltage tap position and a low-voltage tap position, and is connected to the power converter instead of the first AC power source when starting and stopping the power converter. The control apparatus makes a transition from a regenerative discharging mode to a resistance discharging mode. In the regenerative discharging mode, the second AC power source instead of the first AC power source is connected via the low-voltage tap position of the tapped transformer when stopping the power converter, and a gate pulse with a PWM modulation factor determined by a current control unit is given to the switching element to operate the power converter. In the resistance discharging mode, the second AC power source is connected via the resistance from the low-voltage tap position of the tapped transformer to operate the power converter.

Advantageous Effects of Invention

The present invention allows simultaneous charging and discharging of all capacitors of the power conversion apparatus constituted by the DSMMC converter. This makes it possible to reduce the time for starting and stopping the power conversion apparatus.

In an embodiment of the present invention, the initial charge transformer is tapped to allow selection of an AC power source voltage value which differs between operations of initial charging and discharging. Especially when discharging, the range of the regenerative operation into the initial charge power source can be expanded by lowering the AC. power source voltage value. It is therefore possible to significantly reduce energy to be consumed by the resistance. This makes it possible to provide the initial charging device which allows initial charging and discharging operations at high speeds without increasing size of the cooling device for heat dissipation of the resistance.

Brief Description of Drawings

[FIG. 1] FIG. 1 is an example of a main circuit structure of a power conversion apparatus according to a first embodiment of the present invention.
[FIG. 2] FIG 2 is an example of a circuit structure of an arm converter 17.
[FIG. 3] FIG. 3 is a time chart of the respective components as illustrated in FIG. 1 during an initial charging operation.
[FIG. 4] FIG. 4 represents capacitor voltages and AC currents of the initial charging device during an initial charging operation.
[FIG. 5] FIG. 5 represents the current path of the unit converter for efficiently charging the capacitor.
[FIG. 6] FIG. 6 is a control block diagram during an initial charging operation of a DSMMC controller 22.
[FIG. 7] FIG. 7 illustrates an example of a modulation factor output from a modulation factor determination unit.
[FIG. 8] FIG. 8 is a time chart of the respective components as illustrated in FIG. 1 during a discharging operation.
[FIG. 9] FIG. 9 represents capacitor voltages and AC currents of the initial charging device during a discharging operation.
[FIG. 10] FIG. 10 is a control block diagram during a discharging operation of a DSMMC controller 22.
[FIG. 11] FIG. 11 is an example of a main circuit structure of the power conversion apparatus according to a fourth embodiment of the present invention.

Description of Embodiments

The power conversion apparatus and the control apparatus thereof according to embodiments of the present invention are described referring to the drawings. The invention is not limited by those embodiments.
A first embodiment describes an exemplary case of a main circuit structure of the power conversion apparatus according to the present invention. A second embodiment describes an exemplary case of a start control method of the power conversion apparatus which allows high-speed initial charging. A third embodiment describes an exemplary case of a stop control method of the power conversion apparatus which allows high-speed discharging. A fourth embodiment describes an exemplary case of a main circuit structure of the power conversion apparatus which is different from the first embodiment.

First Embodiment

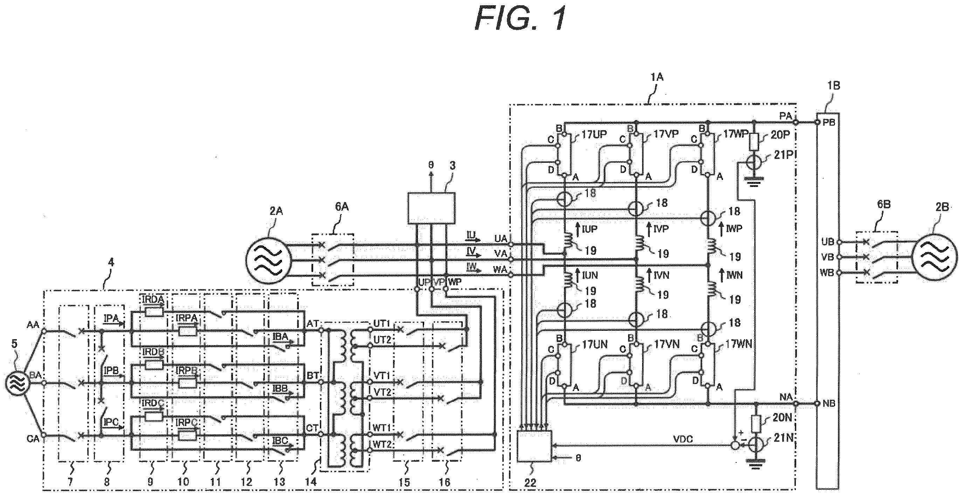

FIG. 1 shows an embodiment of a main circuit structure of the power conversion apparatus according to a first embodiment of the present invention. The power conversion apparatus includes a power converter 1 (DSMMC converters 1A, 1B illustrated in the example), and an initial charging device 4.
Referring to the example of the main circuit structure of the power conversion apparatus in FIG. 1, DC terminals PA, PB and NA, NB of two sets of DSMMC converters 1A, 1B are connected behind, and AC terminals UA, VA, WA of the two sets of DSMMC converters 1A, 1B are connected to three-phase power sources 2A, 2B through main circuit breakers 6A, 6B, respectively so that power can be exchanged between the three-phase power sources 2A and 2B. The example represents that the above-described structure constitutes a frequency conversion system or a DC power transmission system. The present invention is applicable to the power conversion apparatus constituted by at least a set of the power converter 1 and the initial charging device 4. A voltage phase detection unit 3 calculates a voltage phase θ from the three-phase AC voltage, and outputs the calculated result to a DSMMC controller 22.
The initial charging device 4 as the other main component of the power conversion apparatus implements the function of charging the DSMMC converter 1A kept in a pre-start state, that is, internal capacitors kept in a non-charged state. When stopping the DSMMC converter 1A, the device implements the function of discharging the internal capacitors in a charged state. In the context as described above, the initial charging device 4 may be regarded as the charging and discharging device. The initial charging device 4 as shown in FIG. 1 connects its terminals UP, VP, WP to lines having the respective AC terminals UA, VA, WA of the DSMMC converter 1A existing thereon. Terminals AA, BA, CA of the initial charging device 4 are connected to an initial charge power source 5.
The DSMMC converter 1A is described as an example of the power converter 1. An explanation of the DSMMC converter 1B having the same structure as that of the DSMMC converter 1A is omitted. The DSMMC converter 1A includes six arm converters 17UP, 17UN, 17VP, 17VN, 17WP, 17WN, each of which has terminals A and B, six current detectors 18 each for detecting an arm current IUP, IUN, IVP, IVN, IWP, IWN at the respective phases, six circulating current suppression reactors 19, high resistances 20P, 20N, and current detectors 21P, 21N.

EP 4 383 550 A1

The terminals A of the arm converters 17UP, 17VP, 17WP, and the terminals B of the arm converters 17UN, 17VN, 17WN are connected to the AC terminals UA, VA, WA via the current detectors 18 and the circulating current suppression reactors 19, respectively. The terminals B of the arm converters 17UP, 17VP, 17WP, and the terminals A of the arm converters 17UN, 17VN, 17WN are connected to the DC terminals PA, NA, and connected to DC terminals PB, NB of the other DSMMC converter 1B. The arm converter 17 has terminals C and D, which are connected to the DSMMC controller 22.

The connection relation of the DSMMC converter 1A may be simply explained in terms of a Graetz connection. That is, series circuits of the arm converters 17 and the circulating current suppression reactors 19 form an arm. A series circuit of two sets of arms forms a leg. Each connection point of the two sets of arms in the three sets of legs is connected to the respective phases of the AC power source. Both ends of each of three sets of legs are formed as DC terminals.

The DC terminals PA, NA of the DSMMC converter 1A serve to fix the potential by grounding with the high resistances 20P, 20N so that a DC voltage VDC is subjected to the differential measurement by the current detectors 21P, 21N. The measured DC voltage VDC is transmitted to the DSMMC controller 22.

The DSMMC controller 22 calculates a gate pulse g to be given to the respective unit converters based on input values of the arm currents IUP, IUN, IVP, IVN, IWP, IWN, the DC voltage VDC, the voltage phase θ, the capacitor voltage VC of each unit converter, which has been obtained through the terminal D of the arm converter 17. The result is output to the terminal C of the respective arm converters 17. In this embodiment, an explanation about the inner structure of the DSMMC converter 1B is omitted because of the same structure as that of the DSMMC converter 1A.

The initial charging device 4 according to the present invention is described. The initial charging device 4 includes an initial charging device breaker 7, a three-phase short-circuit breaker 8, a discharge resistance 9, an initial charge resistance 10, a discharge breaker 11, an initial charge breaker 12, a resistance bypass breaker 13, a tapped initial charge transformer 14, and transformer tap switch breakers 15, 16.

The initial charging device breaker 7 is an AC breaker for connecting the initial charging device 4 and the initial charge power source 5. The three-phase short-circuit breaker 8 is an AC breaker for star-connection of the discharge resistance 9 at each phase during a discharging operation. The discharge resistance 9 is a resistor for partially consuming energy accumulated in the capacitor during a discharging operation. The discharge breaker 11 is an AC breaker for connecting the discharge resistance 9 to the circuit during a discharging operation. The initial charge resistance 10 is a resistor for preventing the rush overcurrent during an initial charging operation. The initial charge breaker 12 is an AC breaker for connecting the initial charge resistance 10 to the circuit during an initial charging operation. The resistance bypass breaker 13 is an AC breaker for connection to the circuit without having the discharge resistance 9 or the initial charge resistance 10 intervened.

The initial charging device 4 of the power conversion apparatus according to the first embodiment of the present invention is characterized by the tapped initial charge transformer 14. The tap position differs between an initial charging operation for starting the power converter 1 and a discharging operation for stopping the power converter 1. The charging operation is performed at a full-voltage tap position (high-voltage tap position), and the discharging operation is performed at a half-voltage tap position (low-voltage tap position).

Specifically, the tapped initial charge transformer 14 is a transformer which includes first terminals AT, BT, CT at the side of the initial charge power source 5 (hereinafter referred to as a primary winding side), and includes second terminals UT1, VT1, WT1, and third terminals UT2, VT2, WT2 at the side of the DSMMC converter 1A (hereinafter referred to as a secondary winding side). The second terminals UT1, VT1, WT1, and the third terminals UT2, VT2, WT2 are provided so that each winding ratio to the primary winding becomes different. The above structure makes each AC voltage value of the respective terminals at the secondary winding side different. If the AC voltage applied to the primary winding takes the same value, terminals are configured so that each AC voltage of the secondary winding of the second terminals UT1, VT1, WT1 is made higher than each AC voltage of the third terminals UT2, VT2, WT2. The second terminals UT1, VT1, WT1 are used during an initial charging operation. The third terminals UT2, VT2, and WT2 are used during a discharging operation.

The transformer tap switch breakers 15, 16 are AC breakers for switching the connection terminal of the tapped initial charge transformer 14 at the secondary winding side. During an initial charging operation, the transformer tap switch breaker 15 is switched to "close", and the transformer tap switch breaker 16 is switched to "open" to connect the second terminals UT1, VT1, WT1 to the AC terminals UA, VA, WA of the DSMMC converter 1A, respectively. Those tap positions are so called full-tap positions (high-voltage tap positions).

Meanwhile, during a discharging operation, the transformer tap switch breaker 15 is switched to "open", and the transformer tap switch breaker 16 is switched to "close" to connect the third terminals UT2, VT2, WT2 to the AC terminals UA, VA, WA of the DSMMC converter 1A, respectively. Those tap positions are so called half-tap positions (low-voltage tap positions).

As described above, in the present invention, the open/close condition of the respective breakers in the initial charging device 4 (initial charging device breaker 7, three-phase short-circuit breaker 8, discharge breaker 11, initial charge breaker 12, resistance bypass breaker 13, transformer tap switch breakers 15, 16) is switched in accordance with each operation mode to form a circuit for an initial charging operation and a circuit for a discharging operation.

The first embodiment makes it possible to constitute the power conversion apparatus which satisfies the circuit structure and the condition adapted to the respective operations for charging and discharging the capacitor in the DSMMC converter 1.

The tapped initial charge transformer 14 allows selection of the AC power source voltage value which differs between initial charging and discharging operations. Especially when discharging, the range of the regenerative operation into the initial charge power source can be expanded by lowering the AC power source voltage value. It is therefore possible to significantly reduce energy to be consumed by the resistance. This makes it possible to provide the initial charging device which allows initial charging and discharging operations at high speeds without increasing size of the cooling device for heat dissipation of the resistance.

Second Embodiment

The second embodiment describes the method for start control of the power conversion apparatus that allows a high-speed initial charging operation.

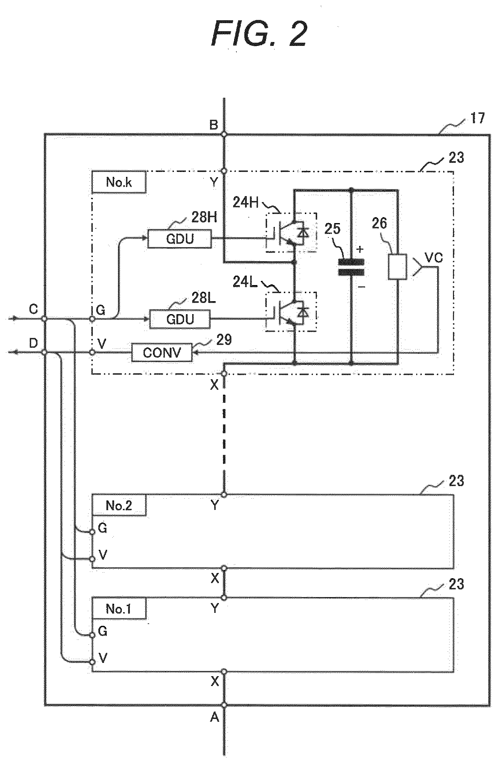

FIG. 2 shows an example of a circuit structure of the arm converter 17. An arm converter 17UP to be described herein has the structure similar to each structure of other arm converters 17UN, 17VP, 17VN, 17WP, 17WN. Accordingly, in this embodiment, explanations of other arm converters are omitted.

The arm converter 17UP is a circuit formed by connecting k units of unit converters 23 in series. The term k denotes the number of unit converters 23 for each arm converter. The unit converter 23 is formed by connecting a switching circuit, a capacitor 25 as an energy accumulating element, and a voltage detector 26 for detecting an end-to-end voltage VC of the capacitor 25. The switching circuit is formed by connecting two switching elements 24H, 24L in series, each connected in parallel to a reflux diode. The unit converter 23 further includes two gate drive units (GDU) 28H, 28L for controlling the respective gates of the switching elements 24H, 24L. A signal converter (CONV) 29 outputs the end-to-end voltage VC of the capacitor 25, which has been detected by the voltage detector 26 to the DSMMC controller 22.

The terminals A to D shown in FIG. 2 are input/output terminals of the arm converter 17UP, and correspond to the terminals A to D of the arm converter as shown in FIG. 1. Among those terminals, the terminal C is an input terminal which receives $2 \times k$ gate pulses to be transmitted from the DSMMC controller 22 to the arm converter 17UP. The terminal D is an output terminal which transmits the end-to-end voltages VC of the k capacitors 25 from the arm converter 17UP to the DSMMC controller 22.

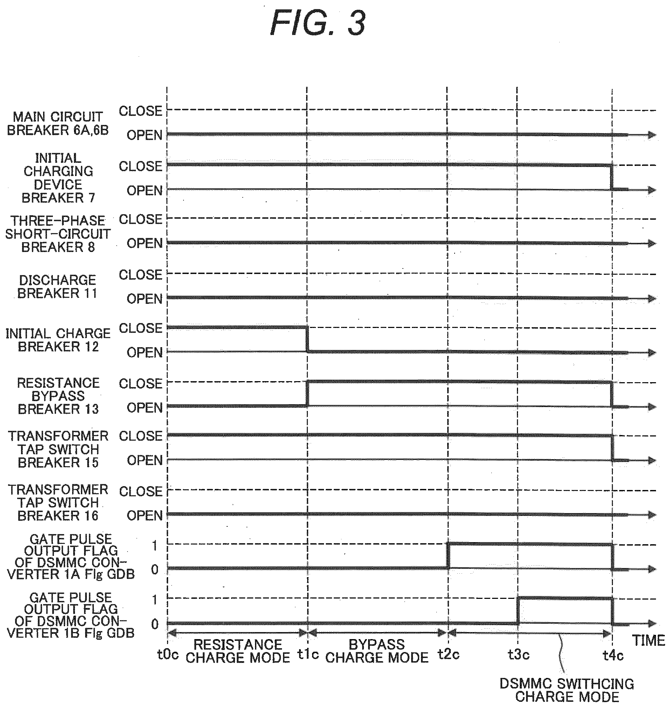

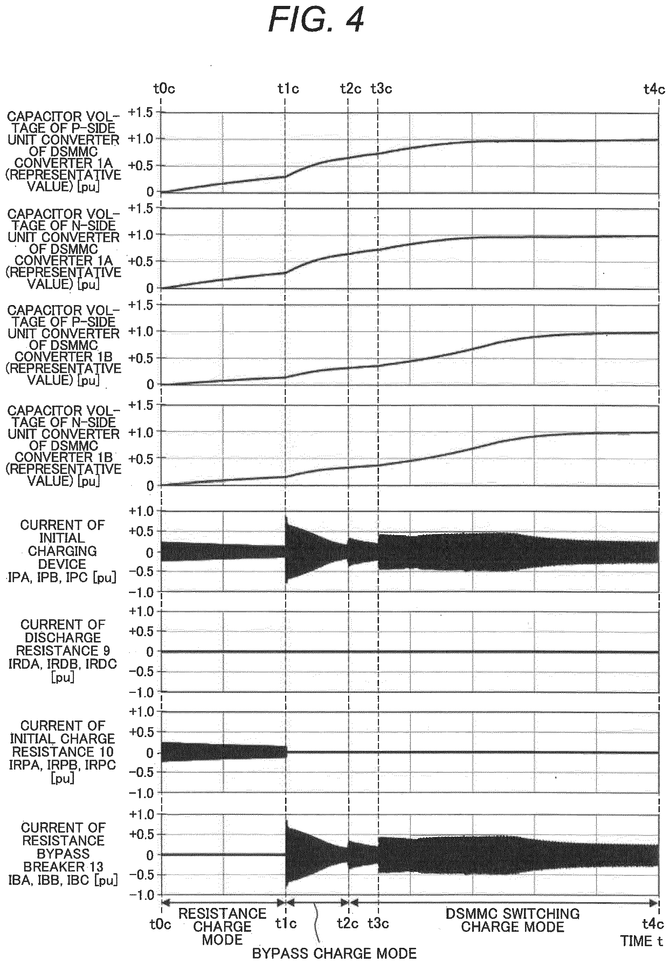

The initial charging operation according to the present invention is described referring to FIG. 3 and FIG. 4. FIG. 3 is a time chart indicating each open/close condition of the respective breakers in the initial charging device 4 as shown in FIG. 1, and gate pulse output conditions of the DSMMC converters 1A, 1B during an initial charging operation. Referring to FIG. 3, the three-phase short-circuit breaker 8 and the discharge breaker 11 are unrelated to the initial charging operation. As those breakers are kept "open" in the period from the time t0c to t4c during the initial charging operation, the explanation about the operation is omitted.

FIG. 4 shows capacitor voltage waveforms of the DSMMC converters 1A, 1B during the initial charging operation, and AC current waveforms of the respective components in the initial charging device 4 according to the present invention. FIG. 4 shows the capacitor voltage of the arm converter 17UP of the DSMMC converter 1A, the capacitor voltage of the arm converter 17UN of the DSMMC converter 1A, the capacitor voltage of the arm converter 17UP of the DSMMC converter 1B, the capacitor voltage of the arm converter 17UN of the DSMMC converter 1B, currents IPA, IPB, IPC in the initial charging device 4, currents IRDA, IRDB, IRDC flowing to the discharge resistance 9, currents IRPA, IRPB, IRPC flowing to the initial charge resistance 10, and currents IBA, IBB, IBC flowing to the resistance bypass breaker 13 in the order from the top.

Referring to FIG. 3 and FIG. 4, the lateral axis denotes time t, and the time points t0c to t4c shown in FIG. 3 coincide with those shown in FIG. 4. The capacitor voltage waveform represents only one voltage waveform of the capacitor of the representative unit converter in the arm converter 17UP or 17UN. The relationship among the AC currents is expressed as below.

$$IPA=IRDA+IRPA+IBA \quad (a)$$

$$IPB=IRDB+IRPB+IBB \quad (b)$$

$$IPC=IRDC+IRPC+IBC \quad (c)$$

Referring to FIG. 3 and FIG. 4, an explanation is made about the initial charging performed in the respective modes of a resistance charging mode, a bypass charging mode, and a DSMMC switching charging mode.

At the time t0c shown in FIG. 3, the main circuit breakers 6A, 6B are "open", and the three-phase power sources 2A, 2B and the DSMMC converters 1A, 1B are electrically disconnected. The initial charging device breaker 7 is "close", the initial charge breaker 12 is "close", the resistance bypass breaker 13 is "open", and the transformer tap switch breakers 15 and 16 are "close" and "open", respectively. The DSMMC converters 1A, 1B are connected to the initial charge power source 5 via the initial charge resistance 10 and the tapped initial charge transformer 14 in the initial charging device 4. The second terminals UT1, VT1, WT1 of the tapped initial charge transformer 14 at the secondary winding side are connected to the AC terminals UA, VA, WA of the DSMMC converter 1A. Each gate pulse output flag FLG_GDB of the DSMMC converters 1A, 1B is set to "0". Operations for switching the DSMMC converters 1A, 1B are stopped.

In the operation period from the time t0c to t1c in the resistance charging mode, the charging current is fed to the initial charge resistance 10 to charge the capacitors of the two DSMMC converters 1A, 1B via the initial charge resistance 10. As FIG. 4 shows, the initial charge resistance 10 prevents the excessive rush current.

At the time t1c, the initial charge breaker 12 is switched from "close to open", and the resistance bypass breaker 13 is switched from "open to close". In the operation period from the time t1c to t2c in the bypass charging mode, the initial charge resistance 10 is bypassed by the resistance bypass breaker 13 to charge the capacitors of the two DSMMC converters 1A, 1B. As FIG. 4 shows, even if the initial charge resistance 10 is bypassed, it is possible to significantly suppress the rush current flowing into the initial charging device 4. In the period from the time t1c to t2c, the initial charging speed of the capacitor can be made higher than in the period from the time t0c to t1c in which charging is performed via the initial charge resistance 10.

As the capacitor is charged until the constant voltage in the period from the time t0c to t1c, the rush current can be significantly restricted.

At the time t2c, the gate pulse output flag FLG_GDB of the DSMMC converter 1A is switched from "0 to 1" to start switching the DSMMC converter 1A. At the time t3c, the gate pulse output flag FLG_GDB of the DSMMC converter 1B is switched from "0 to 1" to start switching the DSMMC converter 1B.

In the operation period from the time t2c to t4c in the DSMMC switching charging mode, the DSMMC converters 1A, 1B are switched to charge the respective capacitors of the DSMMC converters 1A, 1B until the target voltage value (1p. u.). At the time t4c when the voltage reaches the target voltage value, the initial charging is completed.

One of characteristics of the start control in the second embodiment is that a switching operation of a lower switching element 24L of the unit converter 23 shown in FIG. 2 is only started in the period from the time t2c to t4c. The switching operation of an upper switching element 24H of the unit converter 23 is kept stopped.

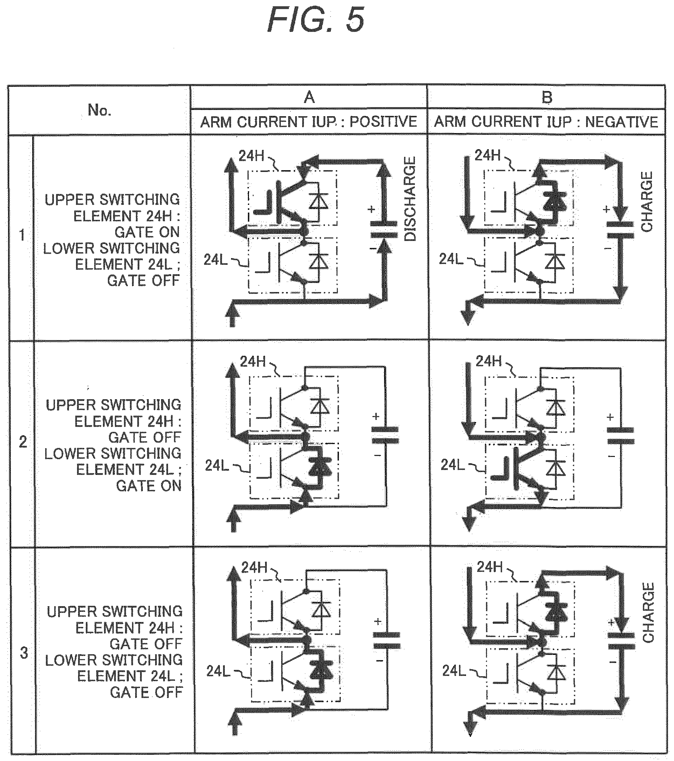

The above-described control allows efficient charging of the capacitor. The reason is described with reference to FIG. 5. Referring to FIG. 5 indicating the current path of the unit converter for efficiently charging the capacitor, along the lateral axis, a field A represents each state where the arm current IUP is positive, and a field B represents each state where the arm current IUP is negative. Along the longitudinal axis, Nos. 1, 2, 3 represent gate ON/OFF states of the switching elements 24H, 24L. Definition of positive/negative current corresponds to the one shown in FIG. 1. Each matrix defined by the lateral and the longitudinal axes represents the circuit structure of the unit converter 23, and the current path under the resultant condition in the charge/discharge state.

As FIG. 5 shows, the matrix No. 1-A indicates the discharging operation mode for discharging the capacitor, the matrixes No. 1-B and No. 3-B indicate the charging operation mode for charging the capacitor, and other matrixes indicate the bypass operation mode in which current is not applied to the capacitor 25.

The operation mode No. 1 for discharging the capacitor 25 is inadequate to the initial charging operation. When the arm current IUP is positive in the inadequate mode, the upper switching element 24H of the unit converter 23 is brought into a gate-on state, and the lower switching element 24L is brought into a gate-off state. In the second embodiment of the present invention, the gate pulse output of the upper switching element 24H is stopped proactively to constantly keep the switching element off.

The above-described control enables to always select the mode from four operation modes of Nos. 2 and 3 by omitting two operation modes of No. 1-A, No. 1-B as shown in FIG. 5. As a result, the operation mode for discharging the capacitor 25 is not selected. This makes it possible to efficiently charge the capacitor. This is the reason for switching only the lower switching element 24L of the unit converter 23 in the period from the time t2c to t4c according to the present invention.

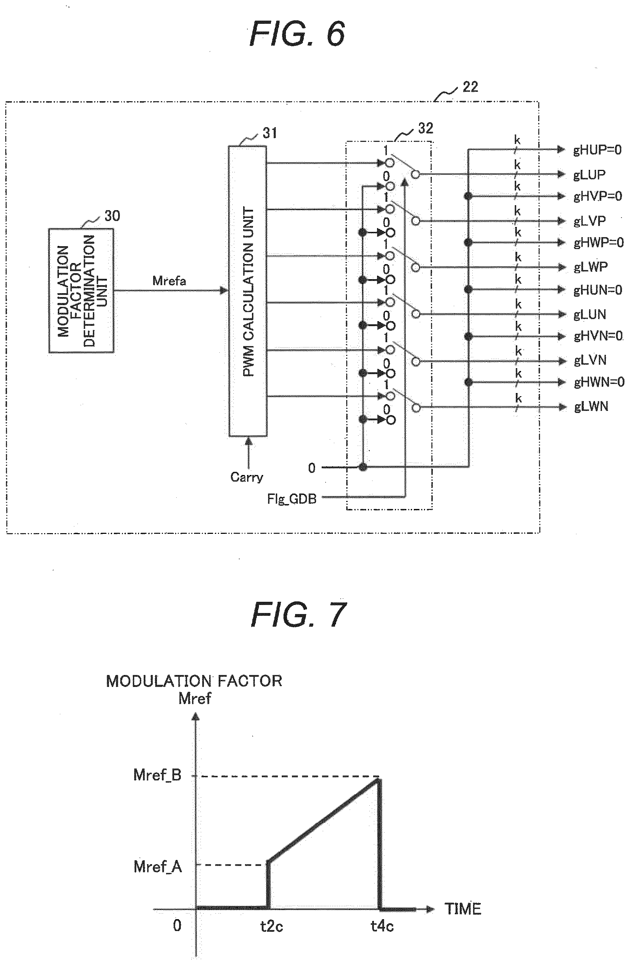

FIG. 6 is a control block diagram for an initial charging operation of the DSMMC controller 22. Referring to the control block shown in FIG. 5, the specific control method to be implemented in the period from the time t2c to t4c is described. Referring to FIG. 6, the DSMMC controller 22 of the DSMMC converter 1A is described. In this embodiment, an explanation of the DSMMC controller 22 of the other DSMMC converter 1B is omitted because of the same control block structure.

The DSMMC controller 22 shown in FIG. 6 includes a modulation factor determination unit 30, a PWM calculation unit 31, and a gate pulse output determination circuit 32. Gate pulses gHUP, gHVP, gHWP, gHUN, gHVN, gHWN as outputs as shown in FIG. 6 are given to the upper switching element 24H of the unit converter 23 shown in FIG. 2. Gate pulses gLUP, gLVP, gLWP, gLUN, gLVN, gLWN are given to the lower switching element 24L of the unit converter 23. The gate pulse either "0" or "1" is output. It is defined that the switching element is ON when the output is "1", and that the switching element is OFF when the output is "0". As described referring to FIG. 5, the gate pulse given to the upper switching element 24H during an initial charging operation is constantly OFF. The gate pulses gHUP, gHVP, gHWP, gHUN, gHVN, gHWN are always output as "0".

The second characteristic of the start control in the second embodiment is that the modulation factor is controlled in the DSMMC switching charging mode, aiming at reduction in the time for starting. For this, the modulation factor determination unit 30 as exemplified in FIG. 7 determines and outputs a modulated wave Mref given to the respective arm converters 17UP, 17UN, 17VP, 17VN, 17WP, 17WN of the DSMMC converter 1A in the period from the time t2c to t4c (DSMMC switching charging mode). The modulation factor determination unit 30 determines and outputs a modulated wave Mref given to the respective arm converters of the DSMMC converter 1B in the period from the time t3c to t4c.

FIG. 7 shows an example of the modulated wave Mref at each time, which is output from the modulation factor determination unit 30. Referring to FIG. 7, the modulation factor determination unit 30 of the DSMMC converter 1A at the time t2c outputs a modulated wave with the modulation factor Mref_A. The modulated wave is then compared with a carrier wave Carry to calculate gate pulses gLUP, gLVP, gLWP, gLUN, gLVN, gLWN. The modulation factor determination unit 30 of the DSMMC converter 1A at the time t4c outputs a modulated wave with the modulation factor Mref_B. The modulated wave is then compared with a carrier wave Carry to calculate gate pulses gLUP, gLVP, gLWP, gLUN, gLVN, gLWN.

The modulated wave Mref is changed like a ramp in the operation period from the time t2c to t4c while changing an ON-OFF ratio of the lower switching element 24L. As FIG. 7 shows, the modulated wave Mref is changed with time to make the ratio between the charging operation mode and the bypass operation mode variable. This makes it possible to adjust the charging speed of the capacitor voltage of the DSMMC converter 1A.

The DSMMC converter 1B is similarly operated except that the gate pulse output starting time is changed from t2c to t3c. In this embodiment, the gate pulse output starting time of the DSMMC converter 1B is shifted to t3c from t2c of the DSMMC converter 1A to coincide the time taken to reach the target voltage value (1p. u.) by adjusting each charging speed of the respective capacitors.

The PWM calculation unit 31 shown in FIG. 6 compares the modulated wave Mref calculated by the modulation factor determination unit 30 with the carrier wave Carry to output the gate pulse.

The gate pulse output determination circuit 32 selects start/stop of the operation for switching the DSMMC converter 1A. When the gate pulse output flag FLG_GDB is "0", the gate pulse output is constantly kept OFF to stop the switching operation. When the gate pulse output flag FLG_GDB is "1", the gate pulse is output from the PWM calculation unit 31.

By implementing the control method, the initial charging operation is completed by charging the capacitor until the target voltage value, switching the initial charging device breaker 7, the resistance bypass breaker 13, the transformer tap switch breaker 15 from "close to open", and switching the gate pulse output flag FLG_GDB from "1 to 0" to electrically disconnect the DSMMC 1A, 1B from the initial charging device 4 at the time t4c when the voltage reaches the target voltage value.

The second embodiment allows the charging to be performed in a short time.

Third Embodiment

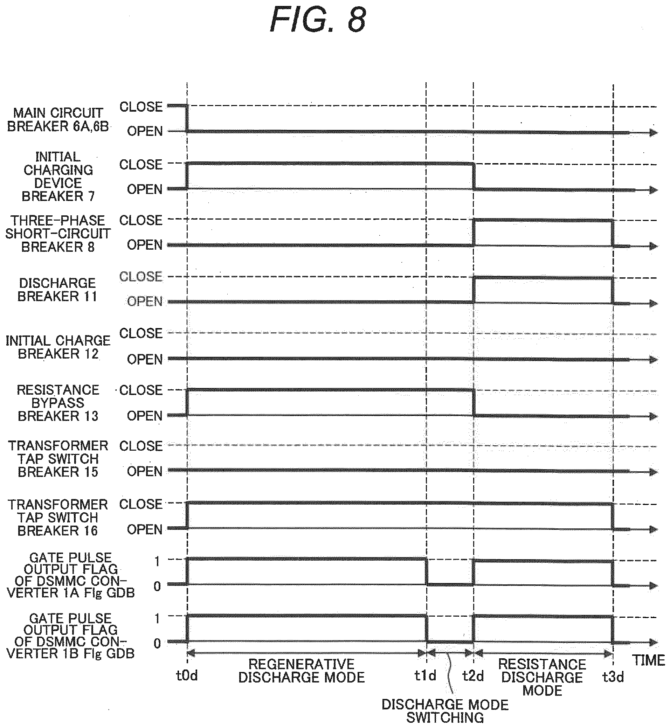

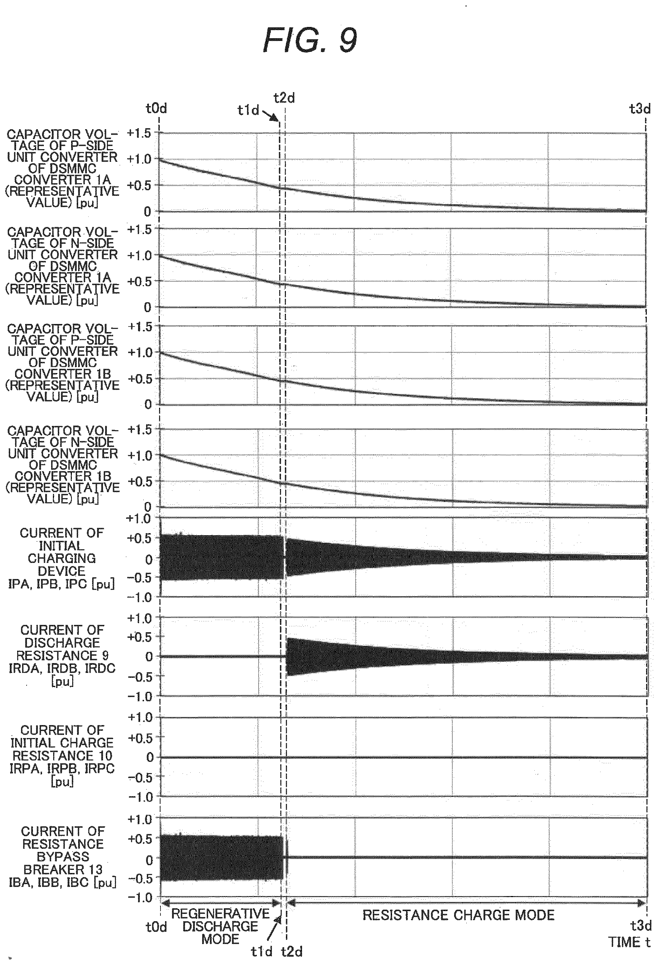

Referring to FIG. 8 and FIG. 9, a third embodiment is described with respect to a stop control method of the power conversion apparatus that enables a high speed discharging.

FIG. 8 is a time chart indicating each opening/closing of the.respective breakers in the initial charging device 4 as shown in FIG. 1, and gate pulse output conditions of the DSMMC converters 1A, 1B during a discharging operation. The initial charge breaker 12 shown in FIG. 8 is unrelated to the discharging operation, and is kept "open" in the discharging operation period from the t0d to t3d as described below. Therefore, an explanation of the initial charge breaker 12 is omitted.

FIG. 9 shows capacitor voltage waveforms of the DSMMC converters 1A, 1B during the discharging operation, and AC current waveforms of the respective components in the initial charging device 4 according to the present invention. Explanations of the respective waveforms shown in FIG. 9 are the same as those shown in FIG. 4. The time points t0d to t3d shown in FIG. 8 coincide with those shown in FIG. 9.

Referring to FIG. 8 and FIG. 9, an explanation is made about discharging operated through a regenerative discharging mode, switching of the discharging mode, and a resistance discharging mode.

At the time t0d shown in FIG. 9, the main circuit breakers 6A, 6B are switched from "close to open" for transition to the discharging operation mode to have regeneration into the initial charge power source 5 under the AC current control by the DSMMC converter. As a result, the three-phase power sources 2A, 2B, and the DSMMC converters 1A, 1B are electrically disconnected, respectively. The initial charging device breaker 7 is switched from "open to close", the three-phase short-circuit breaker 8 is switched to "open", the discharge breaker 11 is switched to "open", the resistance bypass breaker 13 is switched from "open to close", the transformer tap switch breaker 15 is switched to "open", and the transformer tap switch breaker 16 is switched from "open to close". The DSMMC converters 1A, 1B are then connected to the initial charge power source 5 via the tapped initial charge transformer 14 in the initial charging device 4. The third terminals UT2, VT2, WT2 of the tapped initial charge transformer 14 at the secondary winding side are connected to the AC terminals UA, VA, WA of the DSMMC converter 1A. Each of the gate pulse output flags FLG_GDB of the DSMMC converters 1A, 1B is switched from "0 to 1" so that the DSMMC converters 1A, 1B start switching operations.

In the period from the time t0d to t1d for operation in the regenerative discharging mode, energy accumulated in the capacitors of the DSMMC converters 1A, 1B is regenerated into the initial charge power source 5 under the AC current control of the DSMMC converter without intervening the discharge resistance 9. As the energy is regenerated into the initial charge power source 5 without intervening the discharge resistance 9, the discharge current flows to the resistance bypass breaker 13 as shown in FIG. 9. In this period, up to 50% of the voltage of each capacitor of the DSMMC converters 1A, 1B can be discharged.

Generally, it is economical to design the power conversion apparatus with high voltage utilization rate. If the modulation factor during the rated operation is 0.85, the capacitor voltage is reduced by approximately 17%, resulting in an over-modulation operation. Thereafter, the regenerative operation into the power source cannot be performed. The energy of the capacitor is then inevitably consumed by the discharge resistance.

In this embodiment, the DSMMC converter can be operated until the capacitor voltage reaches 45% without causing over-modulation. As described referring to a first embodiment, this can be realized by switching the connection terminal of the tapped initial charge transformer 14 at the secondary winding side from the second terminals UT1, VT1, WT1 to the third terminals UT2, VT2, WT2 to decrease the AC voltage value of the power source.

Specifically, the transformer tap switch breakers 15 and 16 are switched to "open" and "close", respectively to connect the third terminals UT2, VT2, WT2 of the tapped initial charge transformer 14 at the secondary winding side to the AC terminals UA, VA, WA of the DSMMC converter 1A. The second terminals UT1, VT1, WT1, and the third terminals UT2, VT2, WT2 are provided so that winding ratio to the primary winding becomes different. In this embodiment, in the case of the same value of the AC voltage applied to the primary winding, the turn ratio with respect to the secondary winding is set so that each terminal voltage of the second terminals UT1, VT1, WT1 becomes twice higher than each terminal voltage of the third terminals UT2, VT2, WT2, respectively. In this embodiment, the third terminals UT2, VT2, WT2 are connected during the discharging operation. This makes it possible to decrease the AC voltage value of the power source by appropriately half compared with connection to the second terminals UT1, VT1, WT1. As the AC voltage of the secondary winding of the tapped initial charge transformer 14 is reduced by approximately half, a margin of the modulation factor can be increased. This makes it possible to discharge the capacitor voltage up to 45%. The above-described structure allows regeneration of most part of energy accumulated in the capacitor into the power source.

At the time t1d, each gate pulse output flag FLG_GDB of the DSMMC converters 1A, 1B is switched from "1 to 0" to temporarily stop switching operations of the DSMMC converters 1A, 1B, and a preparatory step is taken for transition to the discharging operation mode using the discharge resistance 9.

At the time t2d, the initial charging device breaker 7 is switched from "close to open", the three-phase short-circuit breaker 8 is switched from "open to close", the discharge breaker 11 is switched from "open to close", and the resistance bypass breaker 13 is switched from "close to open". Each gate pulse output flag FLG_GDB of the DSMMC converters 1A, 1B is switched from "0 to 1" to resume the switching operations of the DSMMC converters 1A, 1B for transition to the discharging operation mode using the discharge resistance 9. The discharging mode is switched in the period from the time t1d to t2d.

In the operation period from the time t2d to t3d in the resistance discharging mode, the discharging operation is performed by feeding current to the discharge resistance 9 under the AC current control of the DSMMC converter to allow consumption of energy accumulated in the capacitors of the DSMMC converters 1A, 1B. In the period from the time t0d to t1d, discharged capacitor voltage can be reduced to 45% from 100%. Assuming that energy consumption by the discharge resistance 9 is 100% (energy is entirely consumed by the resistance) as disclosed in Patent Literature 2, the energy consumption of the embodiment results in approximately 20% as expressed by the formula (2). This indicates that the energy to be consumed by the discharge resistance 9 can be reduced by approximately 80%. This may avoid size increase of the cooling device, and accordingly, it is possible to downsize the initial charging device.

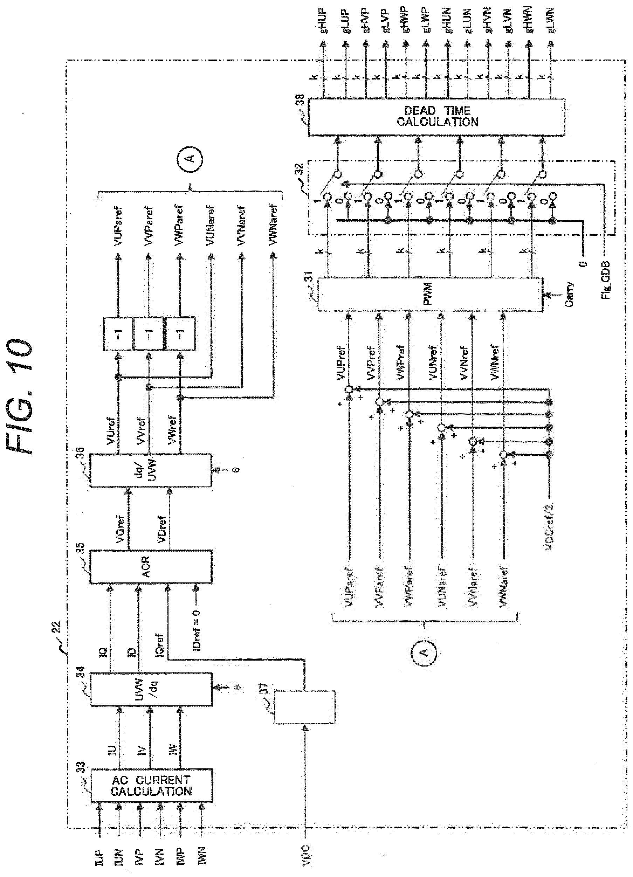

FIG. 10 is a control block diagram of the DSMMC controller 22 during the discharging operation. Referring to the control block shown in FIG. 10, an explanation is concretely made about the specific method of controlling the DSMMC converter 1A in the period from the time t0d to t1d, and the period from the t2d to t3d. As the DSMMC converter 1B is operated with the constant modulation factor of 0.5 in the period from the time t0d to t1d, and the period from the time t2d to t3d, the explanation of the control method of the DSMMC converter 1B, thus is omitted.

The DSMMC controller 22 in the stopped state as shown in FIG. 10 is constituted by an AC current calculation unit 33, a three-phase/two-phase conversion unit 34, an AC current control unit 35, a three-phase/two-phase inverse conversion unit 36, a Q-axis current command calculation unit 37, the PWM calculation unit 31, the gate pulse output determination circuit 32, and a dead time calculation unit 38. The PWM calculation unit 31 and the gate pulse output determination circuit 32 are similar to those operated during the initial charging operation, and accordingly, explanations of those components are omitted.

The AC current calculation unit 33 obtains AC currents IU, IV, IW from arm currents IUP, IUN, IVP, IVN, IWP, IWN at the respective phases, which have been detected by the current detector 18 using the following formulae.

$$IU = IUP - IUN \quad (d)$$

$$IV = IVP - IVN \quad (e)$$

$$IW = IWP - IWN \quad (f)$$

The three-phase/two-phase conversion unit 34 converts the three-phase AC currents IU, IV, IW into the Q-axis current IQ and the D-axis current ID., The relationship among the IU, IV, IW, the IQ, ID, and the voltage phase $\theta$ is expressed by a formula (3).

[formula 3]

$$\begin{bmatrix} IQ \\ ID \end{bmatrix} = \frac{2}{3} \begin{bmatrix} cos(\theta) & cos\left(\theta - \frac{2}{3}\pi\right) & cos\left(\theta + \frac{2}{3}\pi\right) \\ sin(\theta) & sin\left(\theta - \frac{2}{3}\pi\right) & sin\left(\theta + \frac{2}{3}\pi\right) \end{bmatrix} \begin{bmatrix} IU \\ IV \\ IW \end{bmatrix} \quad \cdots (3)$$

The AC current control unit 35 generates AC voltage commands VQref, VDref to cause the AC currents IQ, ID to follow AC current command values IQref, IDref. The AC current control unit 35 is constituted by a proportional integral controller.

The three-phase/two-phase inverse conversion unit 36 converts VQref, VDref to the three-phase AC voltage commands VUref, VVref and VWref. The relationship among the IQ, ID, IU, the IV, IW, and the voltage phase $\theta$ is expressed by a formula (4).

[formula 4]

$$\begin{bmatrix} IU \\ IV \\ IW \end{bmatrix} = \begin{bmatrix} cos(\theta) & sin(\theta) \\ cos\left(\theta - \frac{2}{3}\pi\right) & sin\left(\theta - \frac{2}{3}\pi\right) \\ cos\left(\theta + \frac{2}{3}\pi\right) & sin\left(\theta + \frac{2}{3}\pi\right) \end{bmatrix} \begin{bmatrix} IQ \\ ID \end{bmatrix} \quad \cdots (4)$$

AC voltage commands VUParef, VVParef, VWParef, which are given to the arm converters 17UP, 17VP, 17WP, and AC voltage commands VUNaref, WNaref, VWNaref, which are given to the arm converters 17UN, 17VN, 17WN are generated from the VUref, VVref, Vwref. A DC voltage command VDCref/2 is added to the AC voltage command to calculate arm voltage commands VUPref, VUNref, VVPref, WNref, VWPref, VWNref.

The dead time calculation unit 38 implements a function of preventing both the upper switching element 24H and the lower switching element 24L from being turned ON simultaneously by adding the dead time to the gate pulse derived from the PWM calculation unit 31.

In the period from the time t2d to t3d as shown in FIG. 9, currents IRDA, IRDB, IRDC each flowing to the discharge resistance 9 is reduced on the ground that the Q-axis current command calculation unit 37 as shown in FIG. 10 calculates the Q-axis current command IQref to be changed in accordance with the DC voltage VDC. The following is the reason for changing the Q-axis current command IQref in accordance with the DC voltage VDC in the period from the time t2d to t3d.

Assuming that the discharging operation is continued in the period from the time t2d to t3d based on the IQref as the constant current command, the DC voltage VDC is lowered as the drop of the capacitor voltage into the over-

11

modulation operation region. As a result, the IQ cannot follow the IQref. In order to avoid this, the Q-axis current command calculation unit 37 calculates the Q-axis current command IQref in accordance with the DC voltage VDC. Specifically, the IQref is set to satisfy the formula (5). The term R denotes a resistance value of the discharge resistance 9, and the term X denotes a leakage reactance, of the tapped initial charge transformer 14.

[formula 5]

$$IQref \leq \frac{VDC}{\sqrt{2} \times \sqrt{R^2 + (X^2)}} \qquad \cdots (5)$$

After discharging the capacitor up to the target voltage, at the time t3d, all breakers are set to "open", and the gate pulse output flags FLG_GDB of the DSMMC converters 1A, 1B are switched from "1 to 0" to electrically disconnect the DSMCC 1A, 1B and the initial charging device 4. This makes it possible to safely stop the power conversion apparatus.

The initial charging operation as described above allows simultaneous charging of the capacitor of the power conversion apparatus constituted by two units of the DSMMC converters while preventing the rush overcurrent during the initial charging operation. This makes it possible to reduce the time for starting and stopping the power conversion apparatus. During the discharging operation, the initial charge transformer 14 is tapped to implement the function for adjusting the power source voltage value by switching the tap of the transformer. Compared with the means disclosed in Patent Literature 2, the regenerative operation range during the discharging operation is expanded to reduce the energy consumed by the discharge resistance by approximately 80%.

Fourth Embodiment

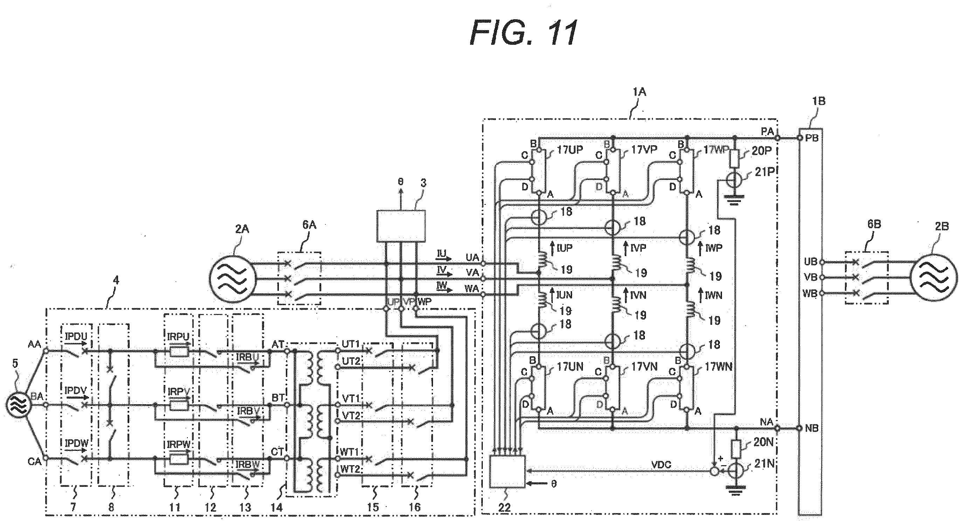

FIG. 11 shows an example of a main circuit structure of a power conversion apparatus according to a fourth embodiment of the present invention. FIG. 11 is different from FIG. 1 according to the first embodiment in that the initial charging device 4 does not include the discharge resistance 9 and the discharge breaker 11 therein. The initial charge resistance 10 serves to implement the function of the eliminated discharge resistance, and the initial charge breaker 12 serves to implement the function of the discharge breaker.

The structure as shown in FIG. 11 allows further downsizing of the initial charging device.

Reference Signs List

1A, 1B: DSMMC converter, 2A, 2B: three-phase power source, 3: voltage phase detection unit, 4: initial charging device, 5: 6A, 6B: main circuit breaker, 7: initial charging device breaker, 8: three-phase short-circuit breaker, 9: discharge resistance, 10: initial charge resistance, 11: discharge breaker, 12: initial charge breaker, 13: resistance bypass breaker, 14: tapped initial charge transformer, 15, 16: transformer tap switch breaker, 17UP, 17UN, 17VP, 17VN, 17WP, 17WN: arm converter, 18, 21P, 21N: current detector, 19: circulating current suppression reactor, 20P, 20N: high resistance, 23: unit converter, 24H, 24L: switching element, 25: capacitor, 26: voltage detector, 28H, 28L: gate drive unit (GDU), 29: signal converter, 30: modulation factor determination unit, 31: PWM calculation unit, 32: gate pulse output determination circuit, 33: AC current calculation unit, 34: three-phase/two-phase conversion unit, 35: AC current control unit, 36: three-phase/two-phase inverse conversion unit, 37: Q-axis current command calculation unit, 38: dead time calculation unit

**Claims**

1. A power conversion apparatus comprising a unit converter which is formed through parallel connection of a capacitor and a switching circuit constituted by two sets of series-connected switching elements having reflux diodes connected in parallel, a power converter which forms an arm having circulating current suppression reactors connected in series, forms a leg by two sets of the arms connected in series, and connects a connection point of the two sets of the arms, serving as an AC terminal to a phase of a first AC power source to cause both ends of the leg to serve as DC terminals, and a charging and discharging device having one end connected to a second AC power source, and the other end connected to the phase of the first AC power source,

   wherein the charging and discharging device includes a tapped transformer which makes a position switchable between a full-tap position and a half-tap position, and is connected to the power converter instead of the first AC power source when starting and stopping the power converter.

**2.** The power conversion apparatus according to claim 1,
wherein a high-voltage tap position of the tapped transformer is connected when starting the power converter, and a low-voltage tap position of the tapped transformer is connected when stopping the power converter.

**3.** A control apparatus of a power conversion apparatus provided with a unit converter which is formed through parallel connection of a capacitor and a switching circuit constituted by two sets of series-connected switching elements having reflux diodes connected in parallel, a power converter which forms an arm having circulating current suppression reactors connected in series, forms a leg by two sets of the arms connected in series, and connects a connection point of the two sets of the arms to a phase of a first AC power source to cause both ends of the leg to serve as DC terminals, and a charging and discharging device having one end connected to a second AC power source, and the other end connected to the phase of the first AC power source, wherein:

the charging and discharging device includes a tapped transformer which makes a position switchable between a high-voltage tap position and a low-voltage tap position, and is connected to the power converter instead of the first AC power source when starting and stopping the power converter; and
the control apparatus makes a transition from a resistance charging mode to a bypass charging mode, and further to a switching charging mode for turn-on of the unit converter to connect the first AC power source instead of the second AC power source to the power converter, the resistance charging mode having the second AC power source connected to an AC terminal of the power converter via a resistance and the high-voltage tap position of the tapped transformer when starting the power converter, and the bypass charging mode having connection to the AC terminal of the power converter from the second AC power source via the tapped transformer.

**4.** The control apparatus of the power conversion apparatus according to claim 3,
wherein the control apparatus controls to increase a PWM modulation factor of a gate pulse given to the switching circuit with the lapse of time in the switching charging mode for turn-on of the unit converter.

**5.** The control apparatus of the power conversion apparatus according to claim 3,
wherein the control apparatus applies an OFF signal to a gate pulse given to one of two sets of series-connected switching elements constituting the switching circuit in the switching charging mode for turn-on of the unit converter to prevent the capacitor connected to the switching circuit in parallel from being brought into a discharge state.

**6.** A control apparatus of a power conversion apparatus including a unit converter which is formed through parallel connection of a capacitor and a switching circuit constituted by two sets of series-connected switching elements having reflux diodes connected in parallel, a power converter which forms an arm having circulating current suppression reactors connected in series, forms a leg by two sets of the arms connected in series, and connects a connection point of the two sets of the arms to a phase of a first AC power source to cause both ends of the leg to serve as DC terminals, and a charging and discharging device having one end connected to a second AC power source, and the other end connected to the phase of the first AC power source, wherein:

the charging and discharging device includes a tapped transformer which makes a position switchable between a high-voltage tap position and a low-voltage tap position, and is connected to the power converter instead of the first AC power source when starting and stopping the power converter; and
the control apparatus makes a transition from a regenerative discharging mode to a resistance discharging mode, in the regenerative discharging mode, the second AC power source instead of the first AC power source is connected via the low-voltage tap position of the tapped transformer when stopping the power converter, and a gate pulse with a PWM modulation factor determined by a current control unit is given to the switching element to operate the power converter, and in the resistance discharging mode, the second AC power source is connected via the resistance from the low-voltage tap position of the tapped transformer to operate the power converter.

**Amended claims under Art. 19.1 PCT**

**1.** (amended) A power conversion apparatus comprising a power converter (1A) which connects a plurality of unit converters (23) connected in series, the unit converter being formed through parallel connection of a capacitor (25) and a switching circuit constituted by two sets of series-connected switching elements (24H, 24L) having reflux diodes connected in parallel, the power converter forming an arm having a current detector (18) connected to a circulating current suppression reactor (19) in series, forming a leg by connecting two sets of the arms in series, and connecting a connection point of the two sets of the arms of the leg at each phase, serving as an AC terminal (UA, VA, WA) to a phase of a first AC power source (2A) via a main circuit breaker (6A) to cause both ends of the leg at each phase to serve as DC terminals (PA, NA), and a charging and discharging device (4) having one end (AA, BA, CA) connected to a second AC power source (5), and the other end (UP, VP, WP) connected to the AC terminal (UA, VA, WA), wherein:

the charging and discharging device (4) of the power conversion apparatus includes a tapped transformer (14) which makes a position switchable between a full-tap position (UT1, VT1, WT1) and a half-tap position (UT2, VT2, WT2); and

the full-tap position (UT1, VT1, WT1) of the tapped transformer (14) is connected when starting the power converter, and the half-tap position (UT2, VT2, WT2) of the tapped transformer (14) is connected when stopping the power converter (1A) to connect the charging and discharging device (4) instead of the first AC power source (2A) to the power converter (1A).

2. (deleted)

3. (amended) A control apparatus of a power conversion apparatus including a power converter (1A) which connects a plurality of unit converters (23) connected in series, the unit converter being formed through parallel connection of a capacitor (25) and a switching circuit constituted by two sets of series-connected switching elements (24H, 24L) having reflux diodes connected in parallel, the power converter forming an arm having a current detector (18) connected to a circulating current suppression reactor (19) in series, forming a leg by connecting two sets of the arms in series, and connecting a connection point of the two sets of the arms of the leg at each phase, serving as an AC terminal (UA, VA, WA) to a phase of a first AC power source (2A) via a main circuit breaker (6A) to cause both ends of the leg at each phase to serve as DC terminals (PA, NA), and a charging and discharging device (4) having one end (AA, BA, CA) connected to a second AC power source (5), and the other end (UP, VP, WP) connected to the AC terminal (UA, VA, WA), wherein:

the charging and discharging device (4) includes a tapped transformer (14) which makes a position switchable between a full-tap position (UT1, VT1, WT1) and a half-tap position (UT2, VT2, WT2), and when starting the power converter (1A), the charging and discharging device (4) instead of the first AC power source (2A) is connected to the power converter (1A); and

the control apparatus (22) makes a transition from a resistance charging mode to a bypass charging mode, and further to a switching charging mode, the resistance charging mode having the second AC power source (5) connected to the AC terminal (UA, VA, WA) of the power converter (1A) via an initial charge resistance (10), an initial charge breaker (12) of the charging and discharging device (4), and the full-tap position (UT1, VT1, WT1) of the tapped transformer (14) to charge the capacitor (25) connected to the switching circuit in parallel when starting the power converter (1A), the bypass charging mode having the second AC power source (5) connected to the AC terminal (UA, VA, WA) of the power converter (1A) via a resistance bypass breaker (13), and the full-tap position (UT1, UT1, WT1) of the tapped transformer (14) to charge the capacitor (25) connected to the switching circuit in parallel, the switching charging mode for turn-on of the switching element (24H, 24L) of the unit converter (23) by means of a gate pulse (gHUP, gLUP, gHUN, gLUN, gHVP, gLVP, gHVN, gLVN, gHWP, gLWP, gHWN, gLWN) from the control apparatus (22) to charge the capacitor (25) connected to the switching circuit in parallel for controlling to connect the first AC power source (2A) instead of the charging and discharging device (4) to the power converter (1A) after completion of charging of the capacitor (25) connected to the switching circuit in parallel.

4. (amended) The control apparatus of the power conversion apparatus according to claim 3, wherein the control apparatus (22) controls to increase a PWM modulation factor of a gate pulse given to the switching circuit with the lapse of time in the switching charging mode for turn-on of the switching element (24H, 24L) of the unit converter (23) by means of the gate pulse (gHUP, gLUP, gHUN, gLUN, gHVP, gLVP, gHVN, gLVN, gHWP, gLWP, gHWN, gLWN) from the control apparatus (22).

5. (amended) The control apparatus (22) of the power conversion apparatus according to claim 3, wherein the control apparatus (22) controls to constantly keep an OFF signal applied to the gate pulse (gHUP, gHUN, gHVP, gHVN, gHWP, gHWN) given to the upper switching element (24H) of the switching circuit formed by two sets of series-connected switching elements (24H, 24L) in the switching discharging mode for turn-on of the switching element (24H, 24L) of the unit converter (23) by means of the gate pulse (gHUP, gLUP, gHUN, gLUN, gHVP, gLVP, gHVN, gLVN, gHWP, gLWP, gHWN, gLWN) from the control apparatus (22) to prevent the capacitor (25) connected to the switching circuit in parallel from being brought into a discharge state.

**6.** (amended) The control apparatus (22) of the power conversion apparatus according to claim 3, wherein:

the power converter (1A) is connected to the charging and discharging device (4) instead of the first AC power source (2A) when stopping the power converter (1A); and
the control apparatus (22) controls to make a transition from a regenerative discharging mode to a resistance discharging mode, in the regenerative discharging mode, the second AC power source (5) is connected via the half-tap position (UT2, VT2, WT2) of the tapped transformer (14) and a resistance bypass breaker (13) when stopping the power converter (1A), and the gate pulse (gHUP, gLUP, gHUV, gLUN, gHVP, gLVP, gHVN, gLVN, gHWP, gLWP, gHWN, gLWN) is given to the switching element (24H, 24L) to make the PWM modulation factor as determined by a current control unit (35) of the control apparatus (22) to operate the power converter (1A) for discharging the capacitor (25) connected to the switching circuit in parallel, and in the resistance discharging mode, the half-tap position (UT2, VT2, WT2) of the tapped transformer, the discharge breaker (11), the discharge resistance (9), and a three-phase short-circuit breaker (8) are connected to disconnect the second AC power source (5) by an initial charging device breaker (7), and the gate pulse (gHUP, gLUP, gHUN, gLUN, gHVP, gLVP, gHVN, gLVN, gHWP, gLWP, gHWN, gLWN) is given to the switching circuit to make the PWM modulation factor as determined by the current control unit (35) of the control apparatus (22) to operate the power converter (1A) for discharging the capacitor (25) connected to the switching circuit in parallel.

**Statement under Art. 19.1 PCT**

1. An amendment has been made by adding the element as claimed in claim 2 to those claimed in claim 1, and suffixing each code in the drawing to the name of the corresponding component.
2. Claim 2 has been deleted as a result of the amendment as above.
3. Claim 3 has been amended by suffixing each code in the drawing to the name of the corresponding component.
4. Claim 4 has been amended by suffixing each code in the drawing to the name of the corresponding component.
5. Claim 5 has been amended by suffixing each code in the drawing to the name of the corresponding component.
6. An amendment has been made by making claim 6 dependent on claim 3, and suffixing each code in the drawing to the name of the corresponding component.

*FIG. 1*

# FIG. 2

# FIG. 3

EP 4 383 550 A1

# FIG. 4

## FIG. 5

| No. | | A | B |
|---|---|---|---|
| | | ARM CURRENT IUP : POSITIVE | ARM CURRENT IUP : NEGATIVE |
| 1 | UPPER SWITCHING ELEMENT 24H : GATE ON LOWER SWITCHING ELEMENT 24L ; GATE OFF | | |
| 2 | UPPER SWITCHING ELEMENT 24H : GATE OFF LOWER SWITCHING ELEMENT 24L ; GATE ON | | |
| 3 | UPPER SWITCHING ELEMENT 24H : GATE OFF LOWER SWITCHING ELEMENT 24L ; GATE OFF | | |

# FIG. 6

# FIG. 7

# FIG. 8

## FIG. 9

FIG. 10

EP 4 383 550 A1

FIG. 11

EP 4 383 550 A1

## INTERNATIONAL SEARCH REPORT

| | International application No. |
|---|---|
| | **PCT/JP2022/029999** |

**A. CLASSIFICATION OF SUBJECT MATTER**

*H02M 7/497*(2007.01)i; *H02M 7/48*(2007.01)i; *H02M 7/49*(2007.01)i
FI:    H02M7/497; H02M7/48 F; H02M7/49

According to International Patent Classification (IPC) or to both national classification and IPC

**B. FIELDS SEARCHED**

Minimum documentation searched (classification system followed by classification symbols)

H02M7/497; H02M7/48; H02M7/49; H02J7/00; H02J7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/110236 A1 (MITSUBISHI ELECTRIC CORP.) 04 June 2020 (2020-06-04) paragraphs [0011]-[0046], fig. 1-4 | 1 |
| A | entire text, all drawings | 2-6 |
| Y | JP 2011-223735 A (HITACHI, LTD.) 04 November 2011 (2011-11-04) paragraphs [0006], [0035]-[0039], fig. 1, 2 | 1 |
| A | entire text, all drawings | 2-6 |
| A | JP 2011-239581 A (NICHICON CORP.) 24 November 2011 (2011-11-24) entire text, all drawings | 1-6 |
| A | WO 2020/250358 A1 (MITSUBISHI ELECTRIC CORP.) 17 December 2020 (2020-12-17) entire text, all drawings | 1-6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/029999**

| Patent document cited in search report | | | Publication date (day/month/year) | Patent family member(s) | | | Publication date (day/month/year) |
|---|---|---|---|---|---|---|---|
| WO | 2020/110236 | A1 | 04 June 2020 | US 2021/0391808 A1 paragraphs [0026]-[0066], fig. 1-4 | | | |
| JP | 2011-223735 | A | 04 November 2011 | (Family: none) | | | |
| JP | 2011-239581 | A | 24 November 2011 | (Family: none) | | | |
| WO | 2020/250358 | A1 | 17 December 2020 | EP 3985859 A1 entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5775033 B

- JP 6099951 B

**Non-patent literature cited in the description**

- **MAKOTO HAGIWARA ; KAZUTOSHI NISHIMURA ; YASUFUMI AKAGI.** High-pressure motor drive using modular multilevel PWM inverter, First Report : Experimental Verification using miniature model at 400V, 15kw. *Journal of IEEJ D,* April 2010, vol. 130 (4), 544-55